# EUROPEAN PATENT SPECIFICATION

(11) **EP 0 743 289 B1**
(45) Date of publication and mention of the grant of the patent: **10.03.1999**
(21) Application number: 96303208.1
(22) Date of filing: 08.05.1996
(51) Int. Cl.: C03B 37/029, H05B 6/02

(54) **Zirconia induction furnace having magnesia insulation for drawing glass optical fibers**
Zirconiumdioxid-Induktionsofen mit Isolierung aus Magnesiumoxid zum Ziehen optischer Glasfasern
Four à induction à la zircone dont l'isolation est magnésie pour étirage de fibres optiques en verre

(30) Priority: 18.05.1995 US 443510
(43) Date of publication of application: 20.11.1996
(73) Proprietor: AT&T IPM Corp., Coral Gables, Florida 33134 (US)
(72) Inventor: DiMarcello, Frank VIncent, Annandale, New Jersey 08801 (US); Hart, Arthur Clifford Jr., Chester, New Jersey 07930 (US); Huff, Richard Garner, Basking Ridge, New Jersey 07920 (US); Kranz, Karen S., Middlesex, New Jersey 08846 (US); Fleming Jr., James W., Westfield, New Jersey 07090, (US)
(74) Representative: Johnston, Kenneth Graham

(56) References cited:
- EP-A- 0 553 989
- GB-A- 2 121 028
- US-A- 4 547 644
- US-A- 5 410 567
- AT&T TECHNICAL JOURNAL, vol. 66, no. 1, January 1987 - February 1987, SHORT HILLS, NJ, US, pages 33-44, XP002010261 D.P.JABLONOWSKI ET AL.: "Optical fiber manufacturing techniques"
- AMERICAN CERAMIC SOCIETY BULLETIN, vol. 65, no. 12, December 1986, COLUMBUS, OHIO, US, pages 1604-1605, XP002010262 S.KEGUANG ET AL.: "Improved Insulation for an Induction-Heated ZrO2 Furnace"
- OPTICAL FIBER TRANSMISSION II, 22 - 24 February 1977, WILLIAMSBURG, VA, US , pages TuB5-1-TuB5-4, XP000576993 R.B.BUNK: "A zirconia induction furnace for drawing precision silica wave guides"

## Description

### Field of the Invention

This invention relates to apparatus for drawing optical fiber from a glass preform and, in particular, to fiber drawing apparatus using an improved induction heating furnace.

### Background of the Invention

The development of low loss, fused silica optical fiber has led to the investigation of high temperature (e.g., approximately 2000°C.) heat sources for drawing high strength fiber from a glass preform. Of the possible heat sources, oxyhydrogen torches, CO₂ lasers, induction furnaces and resistance furnaces have been commonly employed for drawing high silica fibers. The torch method, while inexpensive, cannot maintain a uniform diameter over long lengths of fiber. The CO₂ laser provides the cleanest drawing atmosphere, but the laser requires special optical designs to radially distribute the energy for drawing and is limited in power. Induction furnaces are among the most useful high temperature sources.

An induction furnace for drawing silica fibers is described in R. B. Runk "A Zirconia Induction Furnace for Drawing Precision Silica Waveguides", Optical Fiber Transmission II Technical Digest (TuB5-1) (Feb. 22-24, 1977). Typically, a fiber induction furnace uses a tubular zirconia susceptor disposed within a radio frequency coil ("RF Coil"). After the zirconia susceptor is heated to a desired temperature of approximately 2100°C, a glass preform rod is introduced into the middle of the susceptor, known as the hot zone. A portion of the preform is reflowed, and optical fiber is drawn from the reflowed portion.

Conventional zirconia fiber draw furnaces comprise an outer cylindrical beaker of fused quartz, an inner tube of zirconia and an insulating region therebetween filled with zirconia granules. A radial pyrometer sight tube is provided through the furnace to permit examination of an axial region of the susceptor.

Although these conventional furnaces have produced fibers for many years, there have been a number of problems. From time to time zirconia particles from the insulating region contaminate the fiber and cause failures. Also the pyrometer site tube, which passes through the zirconia insulating granules, has a tendency to sag with time, causing erroneous temperature readings and premature furnace failure.

Recent trends toward the use of larger preforms, increasing draw speeds and higher furnace temperatures reveal further weaknesses in the conventional furnace design. There have been a number of incidents in which the zirconia insulating grain sinters together and melts to form a donut shaped mass completely surrounding the hottest part of the zirconia tube. Once the zirconia granules begin to melt, the RF field couples into the melted mass causing further sintering and melting. This phenomenon increases the power load on the system and eventually causes furnace failure. Accordingly, there is a need for a new furnace design with enhanced stability at high temperature operation.

A conventional induction furnace is also described in GB-A-2 121 028 to Western Electric Co. Inc.

An alternative effort to solve this problem using shaped refractory material is described in United States Patent No. 5,410,567.

According to the present invention there is provided a furnace as defined in claim 1.

In accordance with the present invention; fiber drawing apparatus is provided with an improved fiber draw furnace wherein an inner zirconia tube is surrounded by a radially-spaced annular insulating region of magnesia within a silica beaker. While the magnesia has a melting point approximately the same as zirconia, the electrical conductivity of magnesia is substantially lower, enabling it to withstand higher RF power. Moreover magnesia is more soluble than zirconia in silica, reducing the likelihood of particulate contamination of the fiber.

### Brief Description of the Drawing

In the drawings:
FIG. 1 is a cross-sectional view of the core of an induction furnace;
FIG. 2 is a vertical section of an induction furnace employing the core of FIG. 1; and
FIG. 3 is a schematic view of a fiber drawing apparatus using the induction furnace of FIG. 2.

### Detailed Description

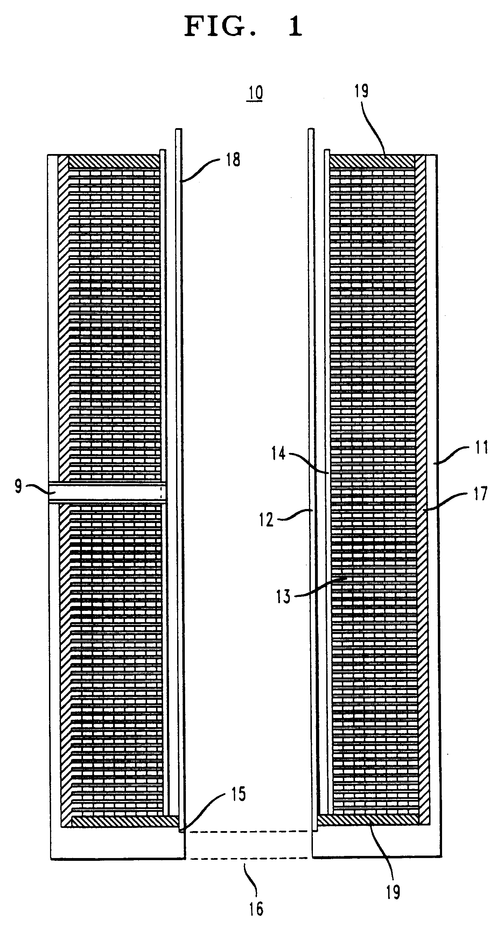

Referring to the drawings, FIG. 1, is a cross-sectional view of the core 10 of a furnace comprising an outer silica beaker 11, an inner zirconia susceptor tube 12 and, disposed between the beaker and the tube, an insulating layer 13 of magnesia (MgO) refractory grog ("grain"). The magnesia grog can be advantageously bounded by a dense magnesia tube 14 for holding the grog in place. A site tube 9 is advantageously provided to permit optical access to the center of the core.

The beaker 11 is preferably an open-top silica vessel having a sidewall and a bottom surface 15 with a central aperture 16. The sidewall, which is preferably flame-sealed to the bottom surface, is advantageously insulated with a layer 17 of aluminosilicate insulation.

The zirconia susceptor tube 12 is disposed radially within the insulating layer 13 and is preferably located centrally within the beaker 11. The susceptor is preferably spaced from the magnesia insulator (e.g. tube 14) in order to avoid unwanted chemical reactions at high temperature. The interior surface 18 of the susceptor provides the furnace bore.

It is advantageous to provide annular, refractory felt discs 19 at the top and bottom of the silica beaker to prevent the movement of particles of refractory grain into the interior of the susceptor 12 where the particles could contaminate the preform or fiber. Suitable refractory felt discs are described in United States Patent No. 4,547,644 (Bair et al)

In a typical embodiment the silica beaker is a cylindrical beaker 6 inches in diameter, and 12 inches in length. The zirconia susceptor tube 12 is yttria-stabilized zirconia manufactured by Stanelco Products Limited. The susceptor can be a cylindrical tube approximately 3 inches in diameter and is preferably slightly longer than the beaker. The insulating magnesia grog 13 is Mag Chem P-98 Magnesia manufactured by Martin-Marietta Magnesia Specialties, Inc., and the dense magnesia tube 14 is a 3 mm thick tube of high density magnesia manufactured by Ozark Technical Ceramics, Inc.

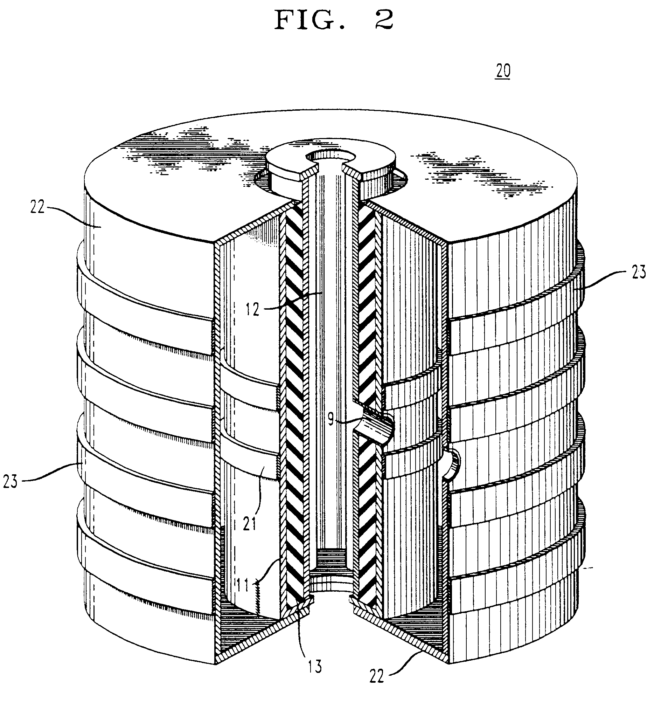

FIG. 2 shows an induction furnace 20 employing the core of FIG. 1. The furnace 20 comprises the silica beaker 11 (and its contents) disposed within an RF induction coil 21. Both the beaker and the coil are surrounded by a metal housing 22 such as a cylindrical copper shell. The housing acts as a shield to reduce stray radio-frequency radiation from the coil 21 and preferably includes a coolant coil 23 for circulation of a coolant such as water. In typical practice, a 4-8 turn induction coil and a 3-5 MHz radio-frequency power supply are efficient for coupling the susceptor.

The advantages of this fiber draw furnace are manifold. The magnesia has substantially lower electrical conductivity than zirconia, permitting magnesia to withstand the use of higher RF power. Moreover, magnesia is more soluble than zirconia in silica, reducing the likelihood of particulate contamination of the fiber. In addition, a magnesia tube used to separate the magnesia insulating grain from the zirconia susceptor provides a suitable inner support for the pyrometer site tube. Further, the lower weight and cost of this design over the previous one provides distinct advantages as furnaces become larger to accommodate state of the art preforms. Since magnesium oxide has approximately one-half the bulk density of zirconium dioxide, the furnace is considerably lighter and easier to handle in the manufacturing environment. Also, because magnesium oxide grain is manufactured in large quantity for use in chemical processes and refractories, it is substantially less expensive than the specially prepared zirconia presently used. Additionally, the design of this furnace allows the removal and replacement of the zirconia susceptor without moving the silica beaker from the draw tower - a considerable time saving in a manufacturing environment

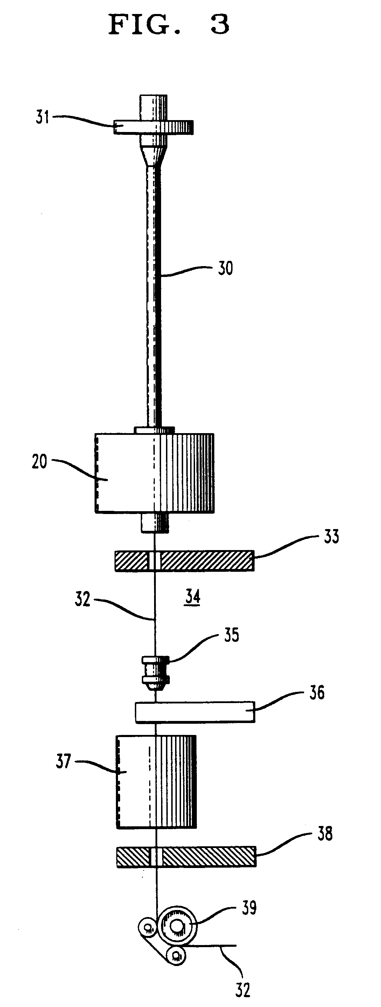

FIG. 3 schematically illustrates fiber drawing apparatus using the improved furnace of FIGS. 1 and 2. In essence the furnace 20 is mounted for receiving a glass preform 30 from a conventional preform feed mechanism 31. The preform is fed into the furnace bore, and an optical fiber 32 is drawn from the heated end of the preform. The drawn fiber, in turn, is moved through a diameter monitor 33, and a cooling region 34. The partially cooled fiber passes through a coating applicator 35 wherein it is provided with a protective polymeric coating. The coating is monitored for concentricity by monitor 36, and the coated fiber is cured in curing station 37, checked for cured diameter at monitor 38 and passes through a capstan 39 to a take-up reel (not shown).

## Claims

1. An induction furnace (20 of Fig. 2) for heating a glass rod comprising a zirconia susceptor tube (12) having an interior region for receiving said glass rod, a cylindrical silica beaker (11) circumscribing said zirconia susceptor and, between said susceptor and said beaker, an insulating region comprising particulate material;
CHARACTERIZED IN THAT:
said particulate material is magnesia grog (13).

2. A furnace according to claim 1 further comprising a magnesia tube (14) disposed between said magnesia grog and said susceptor for holding said grog in place.

3. A furnace according to claim 2 wherein said magnesia tube (14) is spaced from said susceptor.

4. A furnace according to claim 1 further comprising a layer of aluminosilicate insulator (17) disposed between said beaker and said magnesia grog.

5. A furnace according to claim 1 further comprising an RF induction coil (21) for heating said furnace.

6. A furnace according to claim 5 further comprising a metal shell (22) substantially surrounding said RF induction coil (21) for reducing radiation from said coil away from said furnace.

7. A furnace according to claim 1 further comprising a preform mechanism (31) for feeding a glass preform (30) into said furnace (20) and apparatus (39) for drawing optical fiber (32) from said preform.

## Patentansprüche

1. Induktionsofen (20 gemäß Figur 2) zum Erhitzen eines Glasstabs mit einem Zirkoniumdioxid-Aufnahmerohr (12) mit einem Innenbereich zur Aufnahme des Glasstabs, einem das Zirkoniumdioxid-Aufnahmerohr umgebenden zylindrischen Siliciumdioxid-Becher (11) und einem zwischen dem Aufnahmerohr und dem Becher angeordneten Isolierbereich mit teilchenförmigem Material,
DADURCH GEKENNZEICHNET, DASS
es sich bei dem teilchenförmigen Material um Magnesiumoxidbruch (13) handelt.

2. Ofen nach Anspruch 1, weiterhin enthaltend ein zwischen dem Magnesiumoxidbruch und dem Aufnahmerohr angeordnetes Magnesiumoxidrohr (14), das den Bruch in Position hält.

3. Ofen nach Anspruch 2, wobei das Magnesiumoxidrohr (14) vom Aufnahmerohr beabstandet ist.

4. Ofen nach Anspruch 1, weiterhin enthaltend eine zwischen dem Becher und dem Magnesiumoxidbruch angeordnete Schicht aus Aluminosilicat-Isolator (17).

5. Ofen nach Anspruch 1, weiterhin enthaltend eine HF-Induktionsspule (21) zum Erhitzen des Ofens.

6. Ofen nach Anspruch 5, weiterhin enthaltend einen die HF-Induktionsspule (21) weitgehend umgebenden Metallmantel (22) zur Verringerung der Abstrahlung von Spulenstrahlung vom Ofen weg.

7. Ofen nach Anspruch 1, weiterhin enthaltend einen Vorformmechanismus (31) zum Einbringen einer Glasvorform (30) in den Ofen (20) und eine Vorrichtung (39) zum Ausziehen von Lichtleitfaser (32) aus der Vorform.

## Revendications

1. Four a induction (20 sur la figure 2) pour chauffer une tige de verre comprenant un tube réceptacle en zircone (12), possédant une région intérieure pour recevoir ladite tige de verre, un becher en silice cylindrique (11) entourant ledit réceptacle en zircone et, entre ledit réceptacle et ledit becher, une région isolante comprenant un matériau particulaire;
CARACTERISE EN CE QUE:
ledit matériau particulaire est une farine de magnésie (13).

2. Four selon la revendication 1, comprenant en outre un tube de magnésie (14) disposé entre ladite farine de magnésie et ledit réceptacle pour maintenir en place ladite farine.

3. Four selon la revendication 2, dans lequel ledit tube de magnésie (14) est espacé dudit réceptacle.

4. Four selon la revendication 1, comprenant en outre une couche d'isolant aluminosilicate (17) disposée entre ledit becher et ladite farine de magnésie.

5. Four selon la revendication 1, comprenant en outre un serpentin à induction RF (21) pour chauffer ledit four.

6. Four selon la revendication 5, comprenant en outre une coquille métallique (22) entourant essentiellement ledit serpentin à induction RF (21) pour réduire l'émission hors dudit four du rayonnement produit par ledit serpentin.

7. Four selon la revendication 1, comprenant en outre un mécanisme pour préforme (31) pour charger une préforme de verre (30) dans ledit four (20) et un appareil (39) pour étirer une fibre optique (32) à partir de ladite préforme.
